# EUROPEAN PATENT SPECIFICATION

(11) **EP 2 395 846 B1**
(45) Date of publication and mention of the grant of the patent: **23.01.2013**
(21) Application number: 09764920.6
(22) Date of filing: 01.12.2009
(51) Int. Cl.: A23C 9/152, A23C 11/04

(54) **PARTICULATE FAT-CONTAINING POWDER**
TEILCHENFÖRMIGES FETTHALTIGES PULVER
POUDRE CONTENANT UNE GRAISSE EN PARTICULES

(30) Priority: 08.12.2008 EP 08170922
(43) Date of publication of application: 21.12.2011
(73) Proprietor: Campina Nederland Holding B.V., 5301 LB Zaltbommel (NL)
(72) Inventor: LINQIU, Cao, NL-6708 RG Wageningen (NL); VERKERK, Arjan, Willem, NL-3824 AN Amersfoort (NL)
(74) Representative: Ketelaars, Maarten F.J.M.
(86) International application number: PCT/NL2009/050731
(87) International publication number: WO 2010/068093

(56) References cited:
- WO-A-2006/007662
- WO-A-2008/002139

## Description

### FIELD OF THE INVENTION

The invention pertains to instant foamers, creamers, topping bases and whiteners, for use in cold or hot water- or milk-based foodstuffs, such as coffee drinks, e.g. cappuccino, desserts, soups and sauces.

### BACKGROUND DESCRIPTION

Foamers, creamers, topping bases and whiteners may be described as fat-containing powders. Examples are beverage creamers for e.g. coffee or tea, also known as coffee- or tea whiteners; beverage foamers such as cappuccino foamers; fat concentrates for soup- and sauce whiteners to render soups and sauces a creamy appearance and mouth feel; and topping bases, which can be used to prepare whipped food products, such as whipped desserts.

In order to prepare food products with these fat-containing powders, these need to be added to or mixed with water and processed further. Around the world, water used in food processing both industrially and domestically may contain certain levels of bivalent metals, especially calcium and magnesium. Water having high levels of calcium and/or magnesium is called "hard water". At these conditions, addition of the fat powders above causes the fat powder to flocculate, which renders the final food product having an unattractive appearance, for instance by showing feathering or lumping.

To this end, inorganic phosphates (e.g. dipotassium phosphate) are often added, which sequester the calcium and act as a buffer in slightly acidic food applications. These phosphates are classified as E-numbers. However, in line with the general trend to reduce E-numbers in food, there is a desire to eliminate also phosphate from food products. Hence, from a consumer's perspective, there is a need in the art to provide fat powders containing little to no artificial ingredients ('E-numbers'), such as inorganic phosphate and/or citrate.

In addition, inorganic phosphate is also disfavoured in processing. Firstly, it is known to cause lumping due to its hygroscopic properties. Manufacture of a fat-containing powder involves transport of the powder by means of a screw or a vibrating tube during processing. Here, the humidity of the air already gives rise to problems. The powder becomes sticky, and the problem accumulates with subsequent batches. Obviously, cleaning of the transport system with water is no option. Using hot air during processing is an option, but an expensive one. Secondly, during hot processing of inorganic phosphate containing liquids (e.g. spray drying of emulsions), browning of the liquid occurs. This leaves the product with an unattractive appearance.

Hence, there is a need in the art to find other means to avoid lumping or undesired colour change of fat powders such as foamers, creamers, whiteners and toppings.

### SUMMARY OF THE INVENTION

The inventors now make it possible to manufacture fat-containing powders suitable for use as creamers, foamers, topping bases and whiteners that are free from inorganic phosphates, and yet are not troubled by flocculation when mixed with (hard) water or calcium rich dairy liquids. Thereto, one or more phosphopeptides are incorporated into the powder. These phosphopeptides are of natural origin, thus rendering the opportunity to manufacture "E-number free" fat-containing powders.

No lumping was observed during manufacture and processing, fouling of the spray drier was strongly reduced, and no browning of the liquid and the subsequently obtained fat-containing powders occurred. Above all, there was no flocculation observed when the powder was mixed with water, even when exhibiting 35° DH German hardness. Moreover, topping bases made from phosphopeptide-containing fat powders advantageously showed more body and mouthfeel, and whiter foam.

In the examples, a comparison is made with powders made with conventional stabilisers, and with no stabilisers at all. Beneficial effects are reported for phosphopeptides, when mixing in cold and hot foodstuff applications in which water is used. The effects are particularly pronounced in hard water, for instance characterized by a "German Hardness" of more than 5° DH, preferably more than 10° DH, up to 35° DH, more preferable up to 25° DH. A German Hardness of 1 °DH stands for 10 mg CaO per 1000 ml water; conversion tables are widely accessible.

Thus far, phosphopeptides have not been associated with these lines of products, let alone with the above effects. In fact, WO 2006/007662 is concerned with increasing the foam stability of food and beverage and oral care products, and the solution it offers is to use a complex of intact casein phosphoproteins and calcium phosphate. Hence, it PCT Patent Application WO-A-2008/002319 describes a foamer, creamer, topping base or whitener powder. does not hint upon the effect of phosphopeptides on preventing a fat concentrate in a range of applications, including foamers, from lumping in hard water as found by the present inventors. The problems underlying the present invention are considered different from attempts to increase the stability of a foam. Moreover, WO 06/007662 teaches to use inorganic phosphates, like the prior art on foamers, creamer and the like, discussed in the background section.

Moreover, it was found that - in order to arrive at the above advantageous effects - the phosphopeptides could be applied in much lesser amounts than reported for inorganic phosphates in the art. This is also demonstrated in the accompanying examples, showing good results for 0.1 wt% phosphopeptides (equivalent to 0.5 % CPP) but lumping with 0.5 wt% K₂HPO₄.

### DESCRIPTION OF THE INVENTION

The invention thus pertains to a particulate fat-containing powder, which upon addition of a liquid is able to provide said liquid with a creamy, foamy and/or whitened appearance, and wherein said powder contains fat, protein and carbohydrate in amounts that are conventional to foamers, creamers/whiteners and topping bases as they are addressed in the art, and wherein said powder contains 0.05 - 5 wt% of one or more phosphopeptide(s), based on the total dry weight of the powder. The powder may be characterized in that, upon addition of a liquid, it provides said liquid with a creamy, foamy and/or whitened appearance; it contains conventional amounts of fat, protein and carbohydrate.

The invention particularly pertains to the use of phosphopeptides, preferably casein phosphopeptides (CPP), in foamer, creamer, whitener and topping base powder applications. The invention preferably pertains to foamers and/or creamers/whiteners.

Unless explicitly mentioned otherwise, numbers on (relative) amounts of all components are expressed in wt/wt % of the total dry weight of the powder.

### The fat powder

Here below, the fat-containing composition according to the present invention will be addressed as "the fat powder". This term includes "fat concentrate". Alternatively, the term "fat powder" is considered interchangeable with the terminology "foodstuff or beverage powder".

Although the fat, protein and carbohydrate fractions are discussed in more detail below, the following can be noted here: The fat content preferably exceeds the protein content; fat, protein and carbohydrate content preferably make up for at least 80 wt% of the dry weight powder; fat and carbohydrate contribute to at least 70 wt% of the dry weight of the composition.

The moisture content, i.e. water content, of the particulate fat-containing composition is preferably below 5, more preferably below 4 % wt/wt, more preferably below 3 wt%, based on the total weight of the composition. It is preferably a spray-dried composition. It is preferably a (water) soluble fat powder. Its particulate or powdery properties may be characterized by its poured and/or tapped bulk density. It may have a poured bulk density of 100 - 650 g/L, and/or a tapped bulk density of 150- 700 g/litre. The actual bulk density is largely dependent on the food application: If the powder is intended as a foamer, it contains a larger volume of gas vacuoles (than a creamer), wherein the gas upon dissolution of the powder produces foam. The entrapped gas greatly reduces the bulk densities compared to other food applications. Application-specific features will be discussed in more detail below.

It is preferred to include as little of inorganic phosphates as possible. Inorganic phosphates could be totally eliminated from the recipe and still the dissolved fat powder does not show any feathering, precipitation or lumping upon use. It is preferred that the fat powder contains less than 0.75 wt%, preferably less than 0.5 wt%, most preferably less than 0.25 wt%, particularly less than 0.1 wt% inorganic phosphates. Most preferably, the fat powder is substantially or even completely free from inorganic phosphates and citrates. In such case, the fat powder product may be labelled 'E-number free", "free from E-numbers", or the like, wherein the 'E'-prefix stands for the number codes of food additives.

The fat powder preferably has low calcium content, in view of the functionality ofphosphopeptide(s), i.e. the phosphate groups of the phosphopeptide(s) should preferably be essentially free from multivalent cations. It is beneficial if the soluble calcium content is lower than 0.5 %, more preferably lower than 0.4 %, most preferably lower than 0.3 %, particularly lower than 0.2 %, based on the total dry weight of the fat powder. Higher levels of calcium could be detrimental to the functionality of the phosphopeptides in preventing the fat powder from lumping in hard water. Soluble calcium can be determined using AAS (atomic absorbtion spectrometry). It is especially preferred that the total calcium content of the fat powder is less than 0.5 %, more preferably less than 0.4 %, most preferably less than 0.3 %, most preferably less than 0.2 % of the dry powder weight.

### Phosphopeptides

The amount of phosphopeptide or phosphopeptides is in the range 0.05 - 5 %, more preferably 0.1 - 3 %, most preferably up to 2 wt%, based on dry weight. The advantages of the phosphopeptides over conventional inorganic phosphates are most pronounced when the phosphopeptides are applied in concentrations less than 0.5 wt%, where inorganic phosphates fail. Higher amounts are not detrimental, but less favoured from economic perspectives.

Particularly useful phosphopeptides contain - on average - from 2 up to about 50, preferably from 3 up to about 25 amino acid residues. The phosphopeptides are derived from their protein counterparts, by hydrolysis.

Phosphopeptides to be used according to the invention are peptides derived from phosphoproteins, preferably casein or phosvitin, more preferably non-human casein, in particular casein from ungulates, especially ruminants, more in particular members from the family of the Bovidae. The Bovidae include cattle and allies (Bovinae) and goats and allies (Caprinae). Preferred Bovinae species include cattle, yak, buffalo and water buffalo; preferred Caprinae species include sheep and goat. Most preferably the casein is bovine, sheep, goat or yak casein, especially bovine casein. The casein phosphopeptides comprise an amino acid sequence of at least 2 up to about 150 amino acid residues, preferably 2 up to 100, more preferably 3 - 50 amino acid residues.

It is preferred to use casein phosphopeptides (CPP), which may be defined herein as casein-derived peptides having at least one phosphoserine residue per peptide molecule. It is preferred that, on average, the CPP contains at least 1 phosphoserine (SerP) residue per 20 amino acid residues, more preferably at least 1 SerP residue per 10 amino acid residues or even at least 1 SerP per 7, and e.g. up to 3 SerP per 7. In addition to or instead of SerP, other phosphorylated amino acids, such as phosphothreonine (ThrP) or phosphotyrosine (TyrP) may be present. The phosphorus content of the CPP is preferably between 0.6 and 4.8 wt%, more preferably between 2.5 and 4.5 wt%. The nitrogen to phosphorus w/w ratio is preferably between 2.2 and 20, more preferably between 2.4 and 4.3. Suitable CPP can have phosphorus content between 0.6 and 1.5, especially between 0.7 and 1.3 wt%, with an N/P ratio between 10 and 20, especially between 13 and 17; these are sometimes referred to as CPP type 1. The high-phosphorus CPP, having a phosphorus content between 2.5 and 4.5 wt%, are referred to as CPP type 3 of CPP.

Examples of preferred CPP are those comprising the bovine αS₁-casein amino acid sequence 43-58, 59-79 and 106-119, αS₂-sequences 2-21, 47-70, 126-137 and 138-149, or β-casein sequence 2-25, or parts thereof comprising at least one, preferably at least two SerP residues.

Suitable CPP can be prepared by enzymatic hydrolysis of casein or caseinate, especially whole casein, α-caseins, κ-casein or β-casein, for example using trypsin, pepsin, chymotrypsin, pancreatin or bacterial (*Bacillus*), fungal or plant endo- and/or exoproteases or mixtures thereof. Preferably, trypsin is used.

Preferred degrees of hydrolysis of casein and/or caseinate are between 1 and 60 %, more preferably between 5 and 40 %, most preferably between 10% and 25%, respectively, resulting in average peptide lengths of between 100 and 3 amino acids, preferably between 40 and 5 amino acids, more preferably 25 - 8 amino acids. Most preferred is an average peptide length of between 12 and 4 amino acids. Without further fractionation, the peptide mixture thus produced will contain between 15 and 30% of CPP's, and such a mixture can be suitably used as such according to the invention. Unfractionated CPP is generally called CPP type 1.

It is preferred, however, to use a peptide mixture enriched in CPP, so as to contain at least 50% of CPP, up to e.g. 90% or even 100%. Methods of purifying CPP and/or increasing CPP content from peptide mixtures are known in the art, such as anion exchange chromatography (e.g. using cationic Sepharose®), calcium or barium precipitation, ultrafiltration/diafiltration and the like. The production and fractionation of CPP is described e.g. in WO 94/06822. Such a purified CPP is generally called CPP type 3. CPP 3 type of peptides may comprise peptides or peptide mixtures with an average peptide length as specified for CPP 1 type products.

The casein peptides or casein phosphopeptides may be part of a mixture comprising other proteins, in which mixture the other proteins may be hydrolysed or intact. These other proteins may be CPP of different qualities or other phosphorus-containing or other peptides. In such case, the above numbers apply to the phosphopeptide content only, other proteinaceous materials contribute to the "protein content", addressed in the following sub-section.

CPP analogues, e.g. obtained by chemical or genetic modification of casein-derived peptides, or obtained from other, preferably natural phosphopeptides such as phosphovitin or plant phosphopeptides having the required phosphorus content and chain length, can also be used instead of, or in addition to, the CPP described above. Furthermore, synthetic peptides containing SerP residues may be used.

In an embodiment, it is preferred that the Ca/P ratio of the CPP is below 0.3, preferably below 0.1, most preferably below 0.03 (w/w).

### Fat

Although the term "oil" is often used in the art to characterise fats which are in liquid form at room temperature, in the context of the invention the terms "fat" and "oil" are considered interchangeable. Both fats and oils may be applied, provided that the melting behaviour of the fat constituent fulfils the solid fat content (SFC) requirement of the invention. Obviously, for incorporation in a food composition, all fats and oils applied should be edible.

The amount of fat in the fat-containing powder according to the present invention preferably ranges from 10 - 85 %, on dry weight. Suitable fats or oils comprise vegetable fats and/or fish oils. The actual amounts vary on the desired application; guidance is given in Table 1. The fat may be natural, i.e. unhydrogenated, or fully hydrogenated. Partially hydrogenated fats are also suitable..

On fatty acid basis, the proportion of C₈-C₁₄ fatty acids is preferably at least 35% (w/w), up to e.g. 98%, more preferably between 45 and 95%, most preferably between 55 and 90 % (w/w). The proportion of C₁₂ and C₁₄ fatty acids is preferably between 30 and 80%, more preferably 40 and 75%. The level of unsaturated fatty acids is preferably below 50%, more preferably below 30% (w/w).

It is preferred that the fat fraction comprises soy, palm, palm kernel, coconut, and/or canola oil, or mixtures of these fats and oils. Especially preferred are so-called lauric fats, i.e. fats having a relatively high level of C12 and C14 fatty acids, mostly more than 40 wt. %, especially palm kernel oil and/or coconut oil. The amount of lauric fats is preferably at least 50 % of the fat fraction.

Preferably, the fat contains more than 20, 40, 50, 70, 80, 90% saturated fat so as to minimize or avoid the formation of rancidity. The fat may also be fully hardened, or fully hydrogenated. The fat may comprise mainly triglycerides, but may also comprise other fat substances, such as waxes and/or emulsifiers and the like.

The fat may also comprise so-called MCT (Medium Chain Triglyceride) oils, a triglyceride source having fatty acid chain lengths of 6 - 12 carbon atoms.

### Protein

Proteinaceous material, preferably at least a protein, other than the above phosphopeptide(s) is included in the fat powder. It may help to emulsify the fat during the manufacture of the particulate fat powder and/or render the powder with desired foaming properties. The protein in the fat powder may be from 0.4 to 20 %. For the calculations, the phosphopeptide(s) do(es) not contribute to these numbers. The actual amounts vary on the desired application; guidance is given in Table 1.

Proteins may be animal or vegetable proteins.

In one embodiment, preferred proteins comprise milk proteins such as casein, caseinate (sodium and/or potassium caseinate); whey proteins, such as whey powder, preferably demineralised and/or delactosed whey powder, whey protein concentrate (WPC), preferably a WPC selected from WPC 30, WPC 35, WPC 60 or WPC 80; and whey protein isolate (WPI, having a protein purity of > 90 % w/w). Skim milk solids, skim milk powder or milk protein concentrates are also suitable. The milk proteins may be used in any combination of the types mentioned above. A preferred protein embodiment comprises a mixture of skim milk or skim milk solids and whey protein concentrate.

In one embodiment, preferred proteins may be soy proteins, e.g. soy protein isolates and/or soy protein concentrates; wheat protein, especially soluble wheat protein; or egg proteins, preferably egg white protein or egg white albumin.

### Carbohydrate

The particulate fat powder may also contain a carbohydrate. In these product lines, carbohydrates are often applied to provide at least some sweetness to the application, and/or it may serve as a filling agent to enhance spray drying. The carbohydrate in the fat powder may be from 10 - 70 %. The actual amounts vary on the desired application; guidance is given in Table 1.

The carbohydrates may be selected from mono-, di-, oligo- or polysaccharides or mixtures of thereof Suitable carbohydrates further comprise one or more of glucose, fructose, lactose, maltose, sucrose, invert sugar, maltodextrins (preferably having a DE value of 13 to 32), glucose syrup (preferably having a DE value of 27 to 47), inulin or oligofructose. Lactose may be used in amounts of 4 - 20 wt/wt % in the particulate fat powder.

In one embodiment, at least part of the carbohydrates is selected from low-calorie carbohydrates, preferably comprising inulin. Most preferably, up to 50 wt% of carbohydrates in the powder are of the high-caloric type, i.e. having caloric content of higher than 1.5 kcal/g.

### Applications; other ingredients

The discovery that phosphopeptide(s) has beneficial effects in fat-containing powder compositions can be successfully applied as foamers, creamers, whiteners and topping bases in a range of water- or milk-based food applications, which are to be consumed as a liquid or semi-liquid. Examples are soups, sauces, mousses, whipped toppings etc. The actual amounts of fat, protein and carbohydrates in such a powder, and incorporation of other ingredients (and amounts thereof) is determined by the application. In all cases, the preparation of the foodstuff or beverage involves a step of contacting the fat-containing powder with a liquid, i.e. water and/or milk.

Thus the powder according to the present invention, having one or more of the above features can be used, in cold or hot liquid foodstuffs, preferably soup or beverage, more preferably a beverage, as foamers, creamers, whiteners and/or topping bases. These powders may be packaged and labelled as such. In one embodiment, the powders are substantially free from inorganic phosphates, and may be labelled "E-number free".

In one embodiment, the fat powder is a foamer.

In one embodiment, the fat powder is a creamer.

In one embodiment, the fat powder is a topping base.

In one embodiment, the fat powder is a whitener.

The foamers, creamers, whiteners and/or topping bases may be contained in instant powder foodstuff formulations, such coffee powders, coffee or tea extracts, chocolate powders or instant soup or sauce powder and are thus suitable for preparing ready-to-drink beverages and/or soups or sauces.

The invention also pertains to a food product containing the fat powder according to the invention, e.g. water- or milk-based food products such as soups, sauces, desserts, milkshakes. Preferably, the food product is a liquid or semi-liquid food product, preferably a cold or hot beverage, for example coffee, tea, cappuccino.

Also disclosed are single servings containing the fat powder according to the present invention, and/or said fat powders packaged in an amount that would be suitable for use with a single serving of food or beverage.

Powdered foamers and creamers, dairy as well as non-dairy, and (dairy) topping bases are well known in the art and widely used for many years. Typical ingredients for powdered creamers / foamers / topping bases are skimmed milk, (milk) proteins, lipids, carbohydrates, stabilizers, emulsifiers, free flowing agents and modified starches. It is not part of the present invention to amend the traditional recipes for such foodstuffs powders. The conventional amounts of the ingredients are merely affected relatively, by the addition of phosphopeptide(s), preferably in the afore-described amounts, and the knowledge that inorganic phosphates, e.g. potassium (di)phosphates, can be dispensed with for reasons of avoiding feathering, protein flocculation or lumping in hard water applications.

Also, the particulate phosphopeptide-containing fat powder may be added to liquids e.g. beverages in conventional amounts, e.g. between 1 - 3 wt % for creamers; 3 - 8 % wt for foamers; 7 - 25 % wt. for topping bases; and 10 - 20 % for soups or sauces, based on the total weight of the (semi-)liquid foodstuff incorporating the powder, ready for consumption. CPP content may for instance be analyzed for using reversed phase chromatography (RPC), for instance using Hypersil Gold C 18 column, using a gradient of acetonitrile and trifluoric acetic acid as eluents.

For each of the encompassed foodstuff applications, the skilled person may find guidance in the preferred ranges of fat, protein and carbohydrates in Table 1, and in the accompanying examples. Here below some additional features are discussed for the specific applications. In addition, the fat powder may contain a free flowing agent, for instance silicon dioxide, in an amount between 0.25 - 0.75 % wt/wt.

**Table 1. Preferred fat, protein and carbohydrate ranges***

| | Preferred (%) | more preferred (%) | most preferred |
|---|---|---|---|
| **Foamer (example 3)** | | | |
| Fat | 10 - 65 | 15 - 45 | 20- 35 |
| protein | 4 - 20 | 5 - 15 | 6 - 12 |
| carbohydrate | 25 - 70 | 35 - 60 | 40 - 55 |
| | | | |

| **Creamer (ex. 2)** | | | |
|---|---|---|---|
| fat | 10 - 65 | 20 - 55 | 20 - 45 |
| protein | 0.5 - 10 | 0.5-6 | 1-5 |
| carbohydrate | 25 - 70 | 30 - 65 | 35 - 65 |
| | | | |

| **Topping base (ex. 4)** | | | |
|---|---|---|---|
| Fat | 10-55 | 20 - 50 | 30 - 45 |
| protein | 0.4 - 15 | 0.5 - 12 | 1 - 9 |
| carbohydrate | 35 - 75 | 30 - 65 | 20 - 46 |
| | | | |

| **Whitener (ex. 1)** | | | |
|---|---|---|---|
| fat | 45 - 85 | 50 - 80 | 60 - 78 |
| protein | 2 - 10 | 4 - 9 | 4 - 8 |
| carbohydrate | 10 - 20 | 12 - 18 | 14 - 16 |

| | | | |
|---|---|---|---|
| *Per application, fat, protein and carbohydrate contributions in different columns may be combined with one another; the table does not intend to disclose three isolated embodiments. For instance, a preferred amount of fat in a foamer may be combined with a most preferred protein range, and vice versa. Likewise, a lower limit for a fat content range may be combined with an upper limit of a fat content range in a different column. | | | |

### a. Creamer, foamer

The terms "creamers" and "foamers" are often used interchangeable in the art. It is true that the powders share common features, addressed in the above sections, and/or in Table 1. The carbohydrate fraction present in a creamer or foamer preferably comprises glucose syrup and/or maltodextrines, especially those having a DE of between 40 and 50. However, there are also noticeable differences between creamers and foamers, the powder density being the most conspicuous.

A fat powder suitable as a foamer contains gas, and generates a foam layer on beverages once the foamer is brought into contact with the beverage. The entrapped gas may be any suitable food-grade inert gas, but is preferably nitrogen or carbon dioxide.

Due to the presence of large volume of gas vacuoles, a foamer has a relatively low bulk density, preferably a tapped bulk density of between 100 and 400 g/L, preferably between 150 and 300 g/L, more preferably between 180 and 250 g/L. A foamer may suitably be used in beverages such as instant cappuccino, instant chocolate drinks, instant tea and instant milkshake. Other non-beverage food stuffs in which the foamer may be used are soups, sauces and desserts. The bulk density can be controlled by adjusting the pressure of the injected gas before the spray-drying step.

In one embodiment, the fat powder contains a gas entrapped in a matrix of protein and/or carbohydrate and/or fat, wherein the gas is entrapped under pressure, to enhance foaming; "under pressure" relates to a pressure higher than atmospheric, being approximately 1 bar. This is for instance described in WO-01/08504. The matrix may further contain one or more plasticizers to improve the robustness (resistance to cracks) of the matrix. The plasticizers are preferably selected from the group consisting of polyols or sugar alcohols, such as glycerol, mannitol, sorbitol, lactitol, erythritol, trehalose and/or lipids, such as fatty acids, monoglycerides, phospholipids, and are used in an amount of 0-10% by weight, preferably 3-7% by weight, more preferably 4-6% by weight, most preferably 5% by weight on the matrix. Preferably glycerol and/or mannitol is used.

In one embodiment, the fat powder containing pressurized gas described in the preceding paragraph can be mixed with other fat powders within the scope of the invention. For instance, foamers containing atmospheric and/or pressurized entrapped gas may be combined, and/or mixed with yet another fat powder, such as a creamer.

A foamer preferably comprises relatively high amounts of (foam-producing) proteins, preferably a mixture of skim milk or skim milk solids and whey protein concentrate. The weight ratio between whey protein and casein is preferably 0.25 to 10, more preferably 0.5 - 5. The foamer embodiment may further include additional foam forming or stabilizing agents, to increase foam volume. A foamer should have suitable foaming capacities; a foam height layer of at least 7 mm is considered acceptable, wherein the foam height is determined using the method as laid down in the examples.

A creamer contains significantly less (volume) of the above gas vacuoles. This is reflected in its higher bulk densities, preferably a poured bulk density of between 350 and 650 g/L, more preferably between 400 and 600 g/L, even more preferably between 425 and 550 g/L. The tapped bulk density of a creamer may be between 450 - 700 g/L, more preferably 550 - 650, most preferred is 500 - 600 g/L. A creamer does not show a foam layer in the above-cited test.

A creamer in accordance with the present invention is particularly suited as a beverage (coffee or tea) whitener, both in cold and hot applications in which (hard) water is used.

### b. Topping base

A topping base is a product which enables fast and easy preparation of a whippable liquid, and which in whipped form yields a firm foam. A whippable liquid or semi-liquid prepared from the topping base exhibits a good overrun and foam formation. Topping bases find use in e.g. desserts.

In addition to the above fat, protein and carbohydrate features, it contains significant amounts of emulsifier(s). It is preferred that at least one emulsifier is present, preferably in an amount of 5 - 25 %, preferably 6 - 22 %, more preferably 8 - 20%. Emulsifiers can be selected from: Mono- and diglycerides of fatty acids (e.g. glyceryl monostearate, glyceryl distearate), Lactic acid esters of mono- and diglycerides of fatty acids (e.g. glycerolactopalmitate), Acetic acid esters of mono- and diglycerides of fatty acids, Mono- and diacetyl tartaric acid esters of mono- and diglycerides of fatty acids, PGE (polyglycerolesters), PGMS (propylene glycol monostearate), SSL (sodium stearoyl lactylate, sucrose-esters.

Protein, fat, and carbohydrates may be selected from above; preferred proteins are selected from casein, caseinate, (skim) milk powder, whey protein and / or gelatine; Preferred carbohydrates are lactose, sucrose, maltodextrin (DE 10 - 30 pref. 15 - 20), glucose syrup (DE 40 - 50)

Optional ingredients comprise stabilizers, preferably in amounts up to 2 %, and/or hydrocolloids, such as alginate or HPMC (hydroxypropylmethylcellulose), preferably in amounts of 0.01 - 2 %wt.

### c. Whitener

Whiteners (also named "fat concentrates" or "whitening powder") find use in for example soups and sauces. The poured bulk density may be between 250 - 450, preferably between 300 and 400 g/L. The tapped bulk density can have a value of 350 - 550, preferably between 400 and 500 g/L.

Preferred carbohydrates here are mono- and/or disaccharides.

Additional ingredients may be present in the particulate fat powder, such as herbs, spices, vegetable extracts, protein hydrolysates other than phosphopeptides (as flavour enhancer), flavours.

The invention also relates to a process of preparing a particulate fat powder comprising one or more phosphopeptides according to the invention, comprising: (a) providing an aqueous composition comprising fat, protein, carbohydrates and 0.05 - 5 % of one or more phosphopeptides, based on the dry weight of the composition, and (b) drying the aqueous composition to the desired water content.

The aqueous composition may be homogenized to dissolve the water soluble components properly and to emulsify the fat. The order in which the fat, protein, carbohydrates and phosphopeptides are mixed is not in particular critical however it is practical to first combine the protein, carbohydrate and phosphopeptides in an aqueous phase and blend this with the fat. Preferably the fat is heated (melted) to a temperature above 60°C prior to combining it with the aqueous phase. Preferably the homogenization, which may be a single or double stage homogenization, is carried out at a pressure of 50 - 200 bar in a first step and 5 - 75 bar in an optional second step. The homogenization temperature is preferably between 40 and 90 °C.

Before drying, the aqueous composition may have a total dry solids content of between 40 - 75 %. Drying of the aqueous composition may be done by spray drying. The inlet temperature of the air is preferably between 140 - 200 °C; the outlet temperature may lie between 80 - 110 °C. Alternatively to spray drying the (emulsified) mixture comprising the fat, protein, carbohydrates and one or more phosphopeptides, the phosphopeptide or phosphopeptides may be dry admixed with a spray dried fat powder comprising fat, protein and carbohydrates.

Preferably the water used in the preparation of the aqueous composition is low in calcium, preferably soluble calcium that can bind to the phosphopeptides and will negatively affect the functionality of the phosphopeptides in the final food application. The calcium content is such to arrive at a preferred calcium content in the final powder.

Prior to the drying step, additional ingredients like emulsifiers, stabilizers, buffers can optionally be added to the aqueous composition. Free flowing agents may typically be added after the powder has been dried. These ingredients and their amounts (based on the dry matter of the aqueous composition) may be selected as specified above.

In a preferred embodiment, to manufacture a foaming composition, gas is introduced in the aqueous composition, prior to the drying step. The gas may be any food safe gas, but is preferably selected from carbon dioxide or nitrogen, or mixtures thereof. The bulk density of the dry foaming composition can be controlled by adjusting the pressure of the injected gas before the spray drying step. Alternatively or additionally, a foaming composition can be manufactured wherein the gas is pressurized in a matrix of protein, carbohydrate and/or fat; techniques to achieve such 'enhanced foaming compositions' are apparent to the person skilled in the art.

### EXAMPLES

CE90GMM and CE90CPP are enzymatic hydrolysates of casein containing 22 % and 19 % phosphopeptides, respectively (based on weight of the hydrolysate).

### Example 1. Whitener. Preparation and testing of a fat concentrate in soup

An emulsified, spray dried fat powder was prepared containing 79 % non-hydrogenated palm oil (Unimills , the Netherlands), 7 % sodium caseinate (DMV International, the Netherlands), 13.5 % lactose and 0.5 % of a stabilizer. The stabilizers that were tested were CE90CPP (a casein phosphopeptides mixture, DMV International, the Netherlands); sodium hexametaphosphate (SHMP, E 452)), sodium citrate (E 331), dipotassiumphosphate (E 340, K₂HPO₄,) and sodium carbonate (E 500).

The preparation of the fat powder was as follows: Lactose, caseinate and the stabilizer were dissolved in water of 70°C. The palm oil was heated to 70°C and mixed with the water phase and stirred for 10 minutes at this temperature. The fat was then emulsified in a homogenisation step using 175/50 bar, at 65°C. Next, the emulsion was spray dried in a spray drier with an inlet air temperature of 160°, and an air outlet temperature of 100°. The powder was then cooled to room temperature. The moisture content of the powder was approximately 1 %.

The fat powder was tested for creaming/whitening ability in hot tomato soup. Tomato soup was prepared using 17 gr of instant tomato bouillon soup powder. To this 3.0 gram of the spray dried fat powder was blended with the soup powder. 200 ml hot (90°C) hard water of 20 °DH [German hardness, approximately equal to 357 ppm CaCO₃] was added. The pH of the soup was 4.5.

The appearance of the soup was assessed and the results are presented in table 2 below. From this experiment it is clear that even in amounts as low as 0.5 % (equivalent to about 0.1 % phosphopeptides) in a fat powder, CE90CPP is capable of preventing flocculation in applications having a high calcium level (hard water), and even at fairly acidic conditions. Using inorganic phosphates, higher concentrations were needed to reach similar effects. At 0.5 % inorganic phosphates, lumping was still observed.

**Table 2: Appearance of tomato soup using fat powder with various stabilizers**

| | Appearance |
|---|---|
| CE90CPP | Nice, creamy and even appearance of the soup. No signs of(protein)flocculation. |
| SHMP | Flocculation, protein lumps |
| Sodium citrate | Flocculation, protein lumps, rough, streaky appearance of the cream |
| K₂HPO₄ | Lumpy appearance, coagulated material on surface |
| Sodium carbonate | Flocculation and protein lumps observed |

### Example 2.Preparation and testing of coffee creamer

An emulsified, spray dried fat powder was prepared containing 58% Glucodry 330 (Tate&Lyle), 34 % hardened coconut fat (GR GH 30-40, Unimills, the Netherlands), 2.35 % sodium caseinate (DMV International, the Netherlands), 0.4% emulsifiers (mixture of mono- and diglycerides) and beta carotene and 2.5% of a stabilizer. The stabilizers that were tested were K₂HPO₄, CE90CPP, CE90GMM (a casein phosphopeptides mixture, DMV International, the Netherlands) and LE80GT (a whey hydrolysate, DMV International, the Netherlands).

The preparation of the fat powder was as follows: Glucodry, caseinate and the stabilizer were dissolved in water of 70°C. The coconut fat, the emulsifiers and beta carotene were heated to 70°C and mixed with the water phase and stirred for 10 minutes at this temperature. The fat was then emulsified in a homogenisation step using 190 bar, at 65°C. Next, the emulsion was spray dried in a spray drier with an inlet air temperature of 160°, and an air outlet temperature of 100°C. The powder was then cooled to room temperature. The moisture content of the powder was approximately 2 %.

The creamer powder was tested for creamer/whitener properties in coffee. For this purpose 2 grams of the powder was dissolved in 100 ml of hot coffee (85°C). The water used for this coffee was hard water (35°dH). pH and flocculation (and amounts of residue) were monitored. The results are presented in Table 3.

**Table 3: Appearance of coffee creamer made from various stabilizers**

| | pH in coffee | Flocculation | Residue (%)* |
|---|---|---|---|
| Reference, K₂HPO₄ | 6.9 | No | 0% |
| Without stabilizer | 5.3 | Yes, severe | 45% |
| CE90CPP | 5.7 | No | 0% |
| CE90GMM | 5.5 | A little | 6% |
| LE80GT | 5.4 | moderate | 32% |

| | | | |
|---|---|---|---|
| * Wet weight after filtering the liquid over a paper filter. | | | |

### Example 3. Preparation and testing of a cappuccino foamer

An emulsified, spray dried fat powder was prepared containing 45% Glucodry 330 (Tate&Lyle), 34 % hardened coconut fat (GR GH 30-40, Unimills, the Netherlands), 17 % skimmed milk powder and 2% of a stabilizer. The stabilizers that were tested were K₂HPO₄, CE90CPP, CE90GMM (a casein phosphopeptides mixture, DMV International, the Netherlands) and LE80GT (a whey hydrolysate, DMV International, the Netherlands).

The preparation of the fat powder was as follows: Glucodry, skimmed milk powder and the stabilizer were dissolved in water of 70°C. The coconut fat was heated to 70°C and mixed with the water phase and stirred for 10 minutes at this temperature. The emulsion was then homogenised at 150/30 bars, at 65°C. Next, the emulsion was spray dried in a spray drier with an inlet air temperature of 160°, and an air outlet temperature of 100°. Before spray drying inert gas was injected into the emulsion. The powder was then cooled to room temperature. The moisture content of the powder was approximately 2 %. Tapped bulk density of the powder was 210 g/L.

The fat powders were tested for foaming properties in coffee. For this purpose 6 grams of the powder were mixed with 1.5 gram of instant coffee and 5 grams of sugar and dissolved in 100 ml of hot water (85°C). The water used was hard water (35°DH). The pH was measured of this solution. If flocculation occurs it was noted and if so, the residue measured. The results are shown in Table 4.

Foam height was measured as follows: 15 g foamer powder was dissolved in 100 ml of a liquid, in a 250 ml beaker (Ø 5.8 cm),which was then left to stand for 5 minutes (without agitation). The foam surface was then brought into contact with a spindle directly above [spindle diameter 5.6 cm, spindle having 6 holes with a 5 mm diameter evenly distributed 1 mm from outside diameter over the spindle base], wherein the foam was allowed to penetrate into the holes of the spindle. The foam height was measured as the height between the bottom of the spindle and the borderline between the liquid and foam layer in the beaker; the foam height reported in mm. A foam height of at least 7 mm is regarded acceptable for foamer applications.

**Table 4: Appearance of coffee foamer made from various stabilizers**

| | pH in coffee | Foam height (mm) | Flocculation | Residue (%)* |
|---|---|---|---|---|
| Reference, K₂HPO₄ | 6.6 | 9 | No | 0% |
| Without stabilizer | 5.4 | 4 | Yes, severe | 17% |
| CE90CPP | 6.1 | 10 | No | 0% |
| CD90GMM | 5.8 | 9 | A little | 2% |
| LE80GT | 5.6 | 6 | Moderate | 12% |

| | | | | |
|---|---|---|---|---|
| * measured as in table 3. | | | | |

### Example 4. Preparation and testing of a topping base

A spray dried topping base was prepared containing 31 % non hydrogenated palm kernel oil (Cargill, the Netherlands) and 14 % emulsifiers (mixture of mono- and diglycerides, lactem and datem: (Danisco, Denmark)), 49 % glucose syrup (DE 33-37) (Syral, France) and 6 % sodium caseinate). Fat and emulsifiers were heated to 70 °C and mixed together. Protein and carbohydrate were dissolved in the water phase and heated to 70 °C. A pre-emulsion was made from the fat and water phase and the pre-emulsion is subsequently homogenized. The emulsion was spray-dried on a spray drier.

The topping base was whipped with UHT skim milk as such, and in the presence of 1 % CE90GMM (DMV International, the Netherlands) or 1 % CE90CPP (DMV International, the Netherlands).

**Table 5: Evaluation of topping with various stabilizers**

| | Overrun (%) | Time-to-foam (s) | Sensoric evaluation | Appearance |
|---|---|---|---|---|
| No addition | 411 | 55 | Airy, light, foam-like | Off-white colour |
| CE90GMM | 405 | 80 | More body than 1, better mouthfeel | Whiter than without addition |
| CE90CPP | 409 | 60 | Much more body and much creamier than 1, very good mouthfeel | Very white, attractive appearance |

30 Grams of topping base was mixed with 250 ml of skim UHT milk of 5°C, and where needed, 1 % based on the dry components, protein hydro lysate was added.
Whipping was carried in a Hobart N50 kitchen mixer adjusted to speed 3 for 3 minutes. Next, overrun (as determined in the art), appearance and taste were determined.

The results are shown in Table 5 below, wherein "time-to-foam" stands for the time between start of mixing and the time at which foam appearance is observed for the first time. From Table 5 it is evident that the addition of phosphopeptides to toppings enhances the body, mouthfeel and appearance, and at the same time does not negatively influence the overrun or whipping speed. Moreover it was observed that the firmness of the whipped toppings was very similar (tested using a penetrometer).

### Example 5. Water uptake.

Lumping behavior was studied in terms of water uptake, comparing weight changes in powders constituted from CE90CPP and inorganic phosphate (K₂HPO₄), starting with 10 grams of initial weight each. The powders were left overnight at atmospheric conditions and room temperature.

The results (in terms of mass increase) are represented in table 6, where the initial weight was set at 0. The mass increase was more pronounced with phosphate, presumably related to an increased water uptake.

**Table 6: Water uptake in CPP and phosphate**

| Time (hr:min) | CE90CPP (g) | K₂HPO₄ (g) |
|---|---|---|
| 0 | 0 | 0 |
| 43 min | 0.41 | 0.89 |
| 1 hr 11 min | 0.61 | 1.38 |
| 1 hr 55 min | 0.82 | 1.96 |
| 18 hrs | 1.22 | 6.55 |

## Claims

1. A foamer, creamer, topping base or whitener powder, containing 0.05 - 5 wt% of one or more phosphopeptide(s), based on dry weight of the powder.

2. Foamer, creamer, topping base or whitener powder according to claim 1, said powder containing 10 - 85 % fat, 0.4 - 20 % protein and 10 - 70 % carbohydrate, based on dry weight.

3. The powder according to claim 1 or 2, wherein said one or more phosphopeptides have, on average, amino acid sequences of at least 2 up to about 50 amino acid residues.

4. The powder according to any one of the preceding claims, wherein said phosphopeptide, on average, contains at least 1 phosphoserine residue per 20 amino acid residues, more preferably at least 1 phosphoserine residue per 10 amino acid residues.

5. The powder according to any one of the preceding claims, wherein said phosphopeptide(s) contains casein phosphopeptides (CPP).

6. The powder according to claim 5, wherein said CPP is part of a hydrolysate obtained by trypsin hydrolysis of casein.

7. The powder according to any one of the preceding claims, containing less than 0.5 wt% inorganic phosphates, based on dry weight.

8. The powder according to any one of the preceding claims, containing less than 0.5 wt% of soluble calcium, based on dry weight.

9. The powder according to any one of the preceding claims, being substantially free from inorganic phosphates and citrates, said powder or concentrate being packaged and labelled "E-number free".

10. The powder according to any one of the preceding claims, packaged as a single serving.

11. A food product containing the powder according to any one of claims 1 - 10.

12. The food product according to claim 11, being a cold or hot beverage.

13. The food product according to claim 11, being an instant foodstuff powder formulation.

14. Use of one or more phosphopeptides, preferably casein phosphopeptides (CPP), in foamer, creamer, whitener and topping base powder applications.

## Patentansprüche

1. Foamer-, Creamer-, Topping-Base- oder Kaffeeweißer-Pulver, enthaltend 0,05 - 5 Gew.-% von einem oder mehreren Phosphopeptid(en), bezogen auf das Trockengewicht des Pulvers.

2. Foamer-, Creamer-, Topping-Base- oder Kaffeeweißer-Pulver nach Anspruch 1, wobei das Pulver 10 - 85 % Fett, 0,4 - 20 % Protein und 10 - 70 % Kohlenhydrat, bezogen auf das Trockengewicht, enthält.

3. Pulver nach Anspruch 1 oder 2, wobei das eine oder die mehreren Phosphopeptide im Durchschnitt Aminosäuresequenzen von wenigstens 2 bis ungefähr 50 Aminosäureresten aufweisen.

4. Pulver nach einem der vorangehenden Ansprüche, wobei das Phosphopeptid im Durchschnitt wenigstens 1 Phosphoserinrest pro 20 Aminosäureresten, mehr bevorzugt wenigstens 1 Phosphoserinrest pro 10 Aminosäureresten enthält.

5. Pulver nach einem der vorangehenden Ansprüche, wobei das bzw. die Phosphopeptid(e) Caseinphosphopeptide (CPP) enthält.

6. Pulver nach Anspruch 5, wobei das CPP Teil eines Hydrolysats ist, das durch Trypsinhydrolyse von Casein erhalten wird.

7. Pulver nach einem der vorangehenden Ansprüche, enthaltend weniger als 0,5 Gew.-% anorganische Phosphate, bezogen auf das Trockengewicht.

8. Pulver nach einem der vorangehenden Ansprüche, enthaltend weniger als 0,5 Gew.-% lösliches Calcium, bezogen auf das Trockengewicht.

9. Pulver nach einem der vorangehenden Ansprüche, welches im Wesentlichen frei von anorganischen Phosphaten und Citraten ist, wobei das Pulver oder Konzentrat verpackt und "E-Nummern-frei" gekennzeichnet ist.

10. Pulver nach einem der vorangehenden Ansprüche, das als Einzelportion verpackt ist.

11. Nahrungsmittelprodukt, enthaltend das Pulver nach einem der Ansprüche 1-10.

12. Nahrungsmittelprodukt nach Anspruch 11, welches ein kaltes oder heißes Getränk ist.

13. Nahrungsmittelprodukt nach Anspruch 11, welches eine Fertignahrungsmittel-Pulverformulierung ist.

14. Verwendung von einem oder mehreren Phosphopeptiden, vorzugsweise Caseinphosphopeptiden (CPP) in Foamer-, Creamer-, Kaffeeweißer- und Topping-Base-Pulver-Anwendungen.

## Revendications

1. Poudre de produit moussant, crémeux, de base de garniture ou de produit blanchissant contenant 0,05 - 5 % en poids d'un ou plusieurs phosphopeptides, sur la base du poids sec de la poudre.

2. Poudre de produit moussant, crémeux, de base de garniture ou de produit blanchissant selon la revendication 1, ladite poudre contenant 10 - 85 % de graisses, 0,4 - 20 % de protéines et 10 - 70 % de glucides, sur la base du poids sec.

3. Poudre selon la revendication 1 ou 2 où lesdits un ou plusieurs phosphopeptides ont, en moyenne, des séquences d'aminoacides d'au moins 2 jusqu'à environ 50 résidus d'aminoacides.

4. Poudre selon l'une quelconque des revendications précédentes où ledit phosphopeptide, en moyenne, contient au moins 1 résidu de phosphosérine pour 20 résidus d'aminoacides, de préférence encore au moins 1 résidu de phosphosérine pour 10 résidus d'aminoacides.

5. Poudre selon l'une quelconque des revendications précédentes où ledit ou lesdits phosphopeptides contient ou contiennent des phosphopeptides de caséine (PPC).

6. Poudre selon la revendication 5 où lesdits PPC font partie d'un hydrolysat obtenu par hydrolyse de la caséine par la trypsine.

7. Poudre selon l'une quelconque des revendications précédentes contenant moins de 0,5 % en poids de phosphates inorganiques, sur la base du poids sec.

8. Poudre selon l'une quelconque des revendications précédentes contenant moins de 0,5 % en poids de calcium soluble, sur la base du poids sec.

9. Poudre selon l'une quelconque des revendications précédentes qui est sensiblement dépourvue de phosphates et citrates inorganiques, ladite poudre ou concentré étant conditionnée et étiquetée « sans nombre E ».

10. Poudre selon l'une quelconque des revendications précédentes, conditionnée sous forme de portion unique.

11. Produit alimentaire contenant la poudre selon l'une quelconque des revendications 1 - 10.

12. Produit alimentaire selon la revendication 11 qui est une boisson froide ou chaude.

13. Produit alimentaire selon la revendication 11 qui est une formulation de poudre alimentaire instantanée.

14. Utilisation d'un ou plusieurs phosphopeptides, de préférence des phosphopeptides de caséine (PPC), dans des applications de poudre de produit moussant, crémeux, de base de garniture ou de produit blanchissant.
